Europäisches Patentamt

European Patent Office

Office européen des brevets

(11) Publication number: **0 097 975**
A2

(12) **EUROPEAN PATENT APPLICATION**

(21) Application number: **83106393.8**

(22) Date of filing: **30.06.83**

(51) Int. Cl.³: **G 11 B 5/12**
**G 11 B 5/22, G 11 B 5/27**

(30) Priority: **30.06.82 JP 111757/82**

(43) Date of publication of application:
**11.01.84 Bulletin 84/2**

(84) Designated Contracting States:
**DE FR GB IT NL**

(71) Applicant: **TOKYO SHIBAURA DENKI KABUSHIKI KAISHA**
**72, Horikawa-cho Saiwai-ku**
**Kawasaki-shi Kanagawa-ken 210(JP)**

(72) Inventor: **Yamamori,Kazuyoshi**
**6-1-7-403, Konandai**
**Konan-ku Yokohama-shi(JP)**

(74) Representative: **Blumbach Weser Bergen Kramer**
**Zwirner Hoffmann Patentanwälte**
**Radeckestrasse 43**
**D-8000 München 60(DE)**

(54) **Magnetic head for a perpendicular read/write arrangement.**

(57) A magnetic head including a head chip (22) and head holders (24, 26) for holding the head chip therebetween. The head chip includes a core (28, 30) of magentically permeable material which is closed except for a transducing gap (32, 34, 35) provided in the core and is wound by a coil (42, 44). The head holders (24, 26) are made of non-magnetic material and has a guide surface which is brought into slidable contact with a magnetic recording medium. On the guide surface, grooves (50, 52) are formed along the direction of the relative movement of the magnetic recording medium with respect to the head.

F I G. 3A

F I G. 3B

F I G. 3C

EP 0 097 975 A2

Tokyo Shibaura Denki Kabushiki Kaisha
Saiwai-ku, Kawasaki-shi, Japan

- 1 -

Magnetic head for a perpendicular
read/write arrangement

The present invention relates in general to systems
for the magnetic recording and reproduction of information. More particularly, the invention relates to
magnetic heads used in such systems. Even more specifically, the invention is directed to a magnetic head
which records a signal on a flexible magnetic recording
medium such as a floppy disk while it is in contact with
a surface thereof and reproduces a signal therefrom
during a reading of the disk.

Floppy disk apparatus, which record a signal on a
floppy disk and reproduce a signal from information
previously stored thereon therefrom, have largely been
used as a supplementary memory in miniature computer
applications or the like. Such floppy disk apparatus
does not have as large memory capacity as hard disk
apparatus, which records a signal on a hard disk and
reproduces a signal therefrom while maintaining a
magnetic head in non-contact relationship with the disk.
However, the floppy disk is less expensive than the hard
disk.

With increasing sophistication of computer applications, there is a demand to achieve larger memory
capacity. It is desirabale to achieve higher density
recording with a floppy disk apparatus. For this
reason, the perpendicular magnetic recording system as opposed to conventional longitudinal magnetic recording has attracted a great deal of attention. In a perpendicular magnetic recording system, the magnetic medium is magnetized in a direction perpendicular to its surface, thereby achieving a higher density recording than is possible with conventional longitudinal systems.

As the information density of the recorded signal is increased, their wavelengths are shortened (i.e., the frequency of the signal increases), so that the recording and reproduction system characteristics become highly sensitive to and greatly influenced by the spacing between the magnetic head and the recording medium.

There exists a reproduction loss Ls due to the spacing between head and recording medium as follows:

$$Ls \simeq 35 \ d/\lambda \ (dB) \qquad \qquad \ldots \ldots (1)$$

where d is a spacing distance between the magnetic head and the recording medium, and $\lambda$ is a wave-length of the recording signal. As apparent from equation (1), when the recording density is low, the wave-length $\lambda$ is long and the loss Ls is small. However, when the recording density is high, such as for example, $50 \times 10^3$ FRPI (Flux Reversal Per Inch), i.e. the wave-length $\lambda$ is 1 μm, even small spacing distance of 0.1 μm causes a large loss (Ls) of 5.5 dB. Similarly, a recording loss, which cannot be characterized by a quantative equation is caused by the spacing between the magnetic head and the recording medium. Therefore, in order to achieve good recording and reproduction characteristics, the predetermined positional relationships between the magnetic head and the magnetic recording medium must be established with high precision.

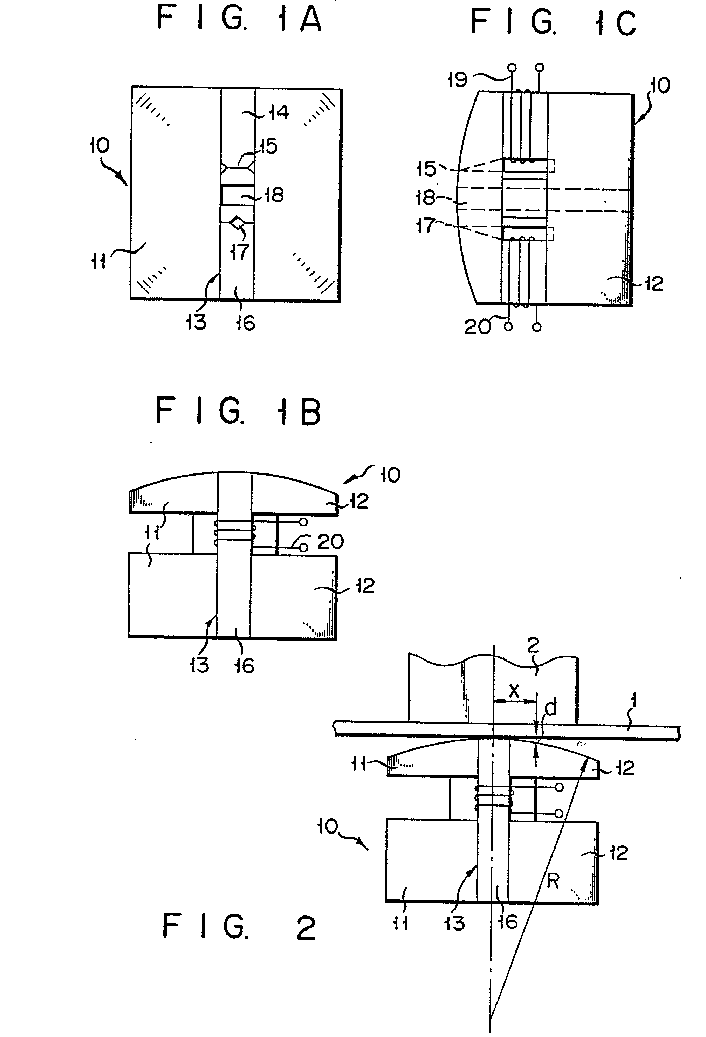

Fig. 1A, 1B and 1C show a conventional magnetic head 10. Magnetic head 10 includes non-magnetic holders 11 and 12 and a head chip 13 positioned between holders 11 and 12. Head chip 13 includes a read/write core 14 having a read/write gap 15 and an erase core 16 having an erase gap 17 adhered together with a spacer 18 of a non-magnetic material interposed therebetween. A read/write coil 19 and an erase coil 20 are wound on read/write and erase cores 14 and 16, respectively. A surface of magnetic head 10 is polished so as to form a part of a spherical or an ellipsoid surface. Magnetic head 10 is put in contact with a floppy disk 1 as shown in Fig. 2. In Fig. 2, floppy disk 1 runs in the direction perpendicular to the surface of the drawing paper. A pressure pad 2 presses floppy disk 1 into contact with magnetic head 10.

In the conventional magnetic head 10, the spacing distance "d" between the magnetic head and floppy disk 1 is denoted as follows:

$$d = R - \sqrt{R^2 - X^2} \qquad \ldots\ldots (2)$$

where R is the radius of curvature of the surface of magnetic head 10 in the direction perpendicular to the floppy disk running direction, and X is the distance from the top portion of magnetic head 10 to a point on the head holder in the direction perpendicular to the floppy disk running direction. When "R" is 60 mm (typical of conventional magnetic heads) and "X" is 150 µm equation (2) indicates that "d" is no more than 0.18 µm.

Accordingly, when there is dust or the like on floppy disk 1 or head holders 11 and 12, the floppy disk is inclined or parted from head chip 13. As a result, intimate contact between floppy disk 1 and head chip 13 cannot be achieved, so that the recording and reproduction characteristics are significantly degraded.

One approach to overcoming this problem was to shorten the radius of curvature of the magnetic head. However, by doing so, the magnetic head's read/write gap or erase gap does not achieve good contact with the floppy disk.

It is an object of the present invention to provide a magnetic head which can reduce the influence of dust, other irregularities or the like on the recording medium or the magnetic head, and can achieve unimpeded intimate contact with the recording medium, thereby obtaining and maintaining high quality recording and reproduction.

It is another object of the present invention to provide a magnetic head for high-density recording and/or reproduction, especially in a perpendicular magnetic recording system, which provides good recording and reproduction characteristics.

In accordance with the preferred embodiment of this invention, the magnetic head includes a head chip and head hold member for holding the head chip. The head chip includes a core of magnetically permeable material which is closed except for a transducing gap provided in the core on an active surface of the magnetic head. The head hold member is made of non-magnetic material and has a guide surface which is brought into slidable contact with the magnetic recording medium. On the guide surface of the head hold member, a groove is formed along the direction of the magnetic recording medium movement.

This invention can be more fully understood from the following detailed description when taken in conjunction with the accompanying drawings, in which:

Figs. 1A, 1B and 1C are plane, front and side views, respectively of a conventional contact-type magnetic head;

Fig. 2 is a sectional view showing the relationship between the conventional contact-type magnetic head and a magnetic recording medium;

Figs. 3A, 3B and 3C are plane, front and side views, respectively, of a magnetic head according to one embodiment of the present invention;

Figs. 4A, 4B and 4C are plane, front and side views, respectively, of a magnetic head according to another embodiment of the present invention;

Figs. 5A and 5B show output signal waveforms of the conventional magnetic head shown in Fig. 1 and the magnetic head according to the present invention shown in Fig. 4, respectively;

Figs. 6A and 6B are photographs showing the appearance of the surfaces of the magnetic head shown in Figs. 1 and 4, respectively;

Figs. 7 to 11 illustrate alternative embodiments of the present invention showing in particular various modifications of the shape of grooves formed on the magnetic head of the present invention, respectively; and

Fig. 12A, 12B and 12C show yet another embodiment of the magnetic head of the present invention.

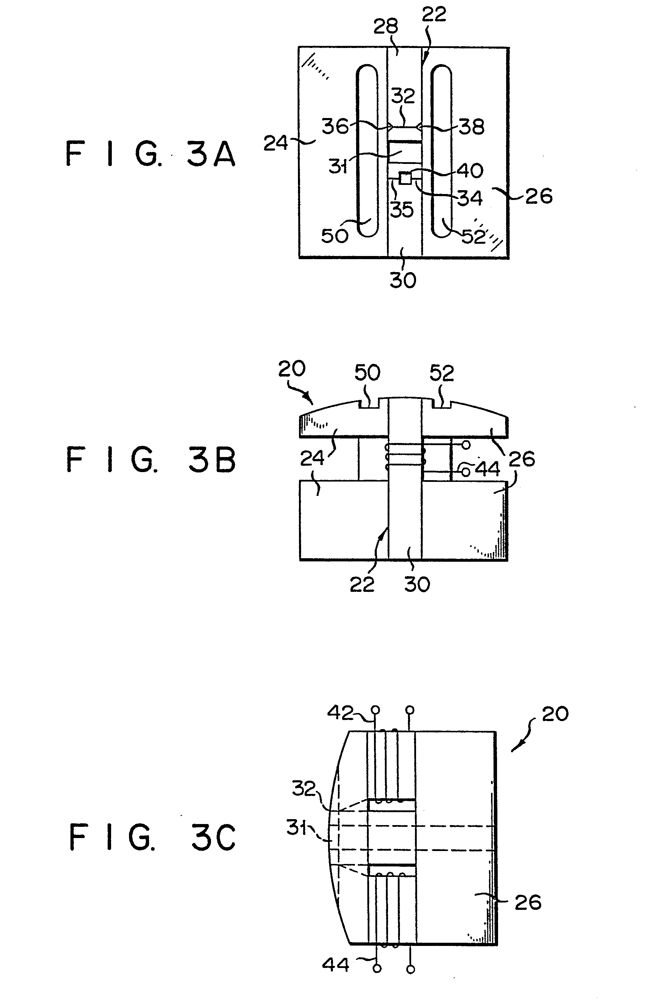

Referring now to Figs. 3A, 3B and 3C, a magnetic head 20 according to one embodiment of the present invention includes a head chip 22 and non-magnetic head holders 24 and 26. Head chip 22 includes read/write and erase cores 28 and 30 of magnetically permeable material which are adhered together with a spacer 31 of a non-magnetic material interposed therebetween. Read/write and erase cores 28 and 30 are closed except for a read/write gap 32 and erase gaps 34 and 35 provided in cores 28 and 30 on an active surface of magnetic head 20. The width of read/write gap 32 is defined by notches 36 and 38 formed in the same longitudinal direction of read/write gap 32 to extend inwardly from the respective side edges of read/write core 28. Namely, read/write gap 32 is formed at the central portion of read/write core 28 between notches 36 and 38. The widths of erase gaps 34 and 35 are defined by a notch 40 formed at a central portion thereof. Read/write and erase coils 42 and 44 are wound on read/write and erase cores 28 and 30, respectively.

Head holders 24 and 26 are adhered to head chip 22 at both sides thereof. Surfaces of head holders 24 and

26 are polished together with the surface of head chip 22 so as to form a guide surface which is brought into slidable contact with a magnetic recording medium such as a pependicular magnetic recording medium. This guide surface is preferably formed to be a part of a spherical or an ellipsoid surface.

A pair of grooves 50 and 52 are formed on the guide surface of head holders 24 and 26 at both sides of head chip 22 and substantially adjacent thereto along the direction of the magnetic recording medium movement.

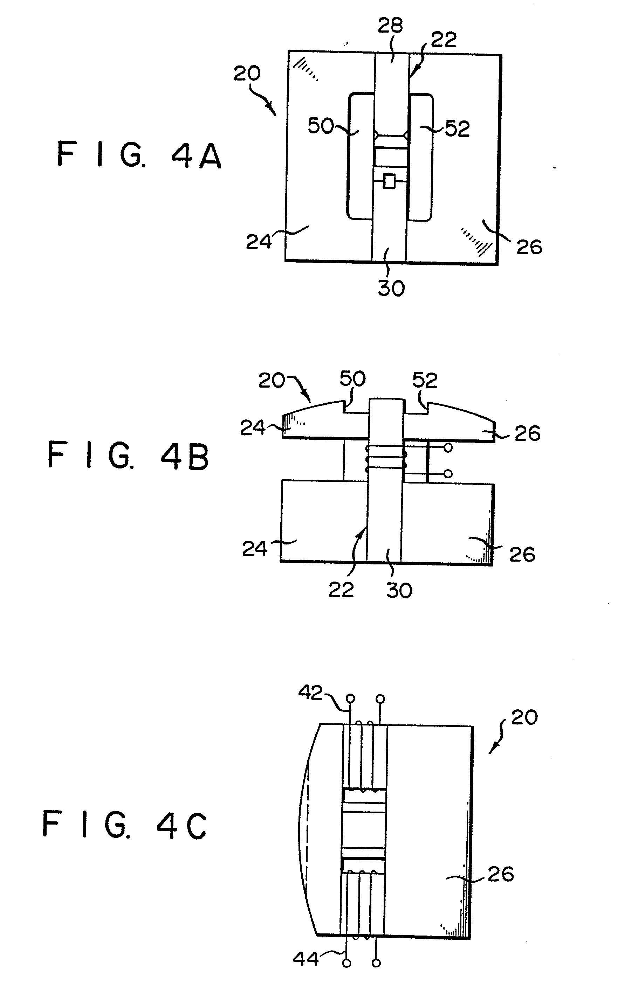

Grooves 50 and 52 may be formed such that each one edge of grooves 50 and 52 comes into contact with the edge of head chip 22 as shown in Figs. 4A, 4B and 4C which are plane, front and side views of another embodiment of the magnetic head according to the present invention.

In the magnetic head of this construction, the distance between the magnetic recording medium and head holders 24 and 26 becomes wider due to grooves 50 and 52. Therefore, even if there is a projection or dust on the magnetic recording medium at a portion corresponding to grooves 50 and 52, the projection or dust passes through grooves 50 and 52, and does not influence the spacing distance between the magnetic recording medium and head chip 22. Accordingly, there is a substituted decrease in the spacing loss due to the projections or dust on the magnetic recording medium or head holders 24 and 26.

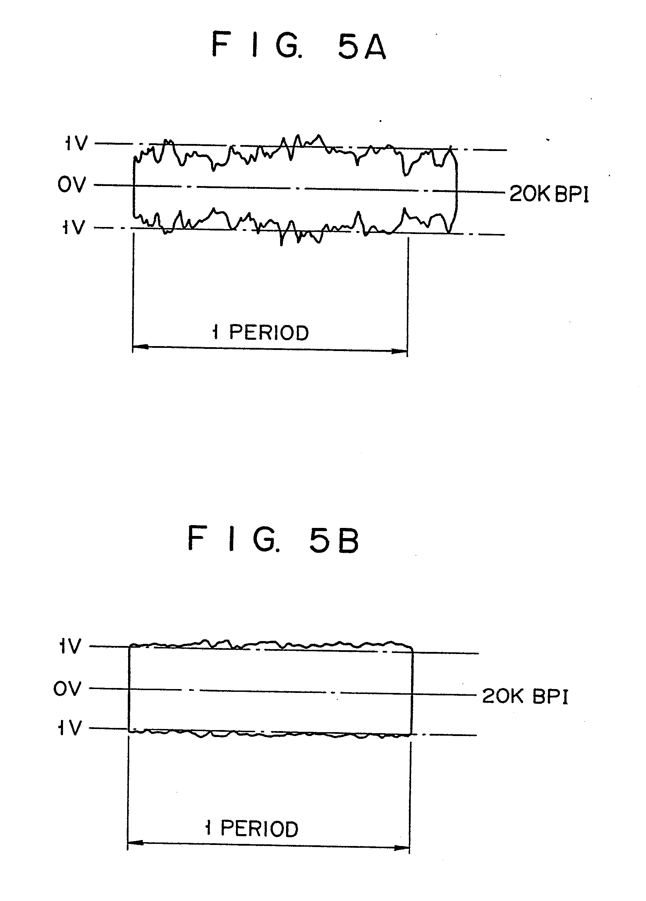

Figs. 5A and 5B show output signal waveforms of the magnetic heads shown in Figs. 1 and 4, respectively. As apparent from the waveforms of the output signal, the magnetic head according to the present invention produces a more stable output signal than the conventional magnetic head.

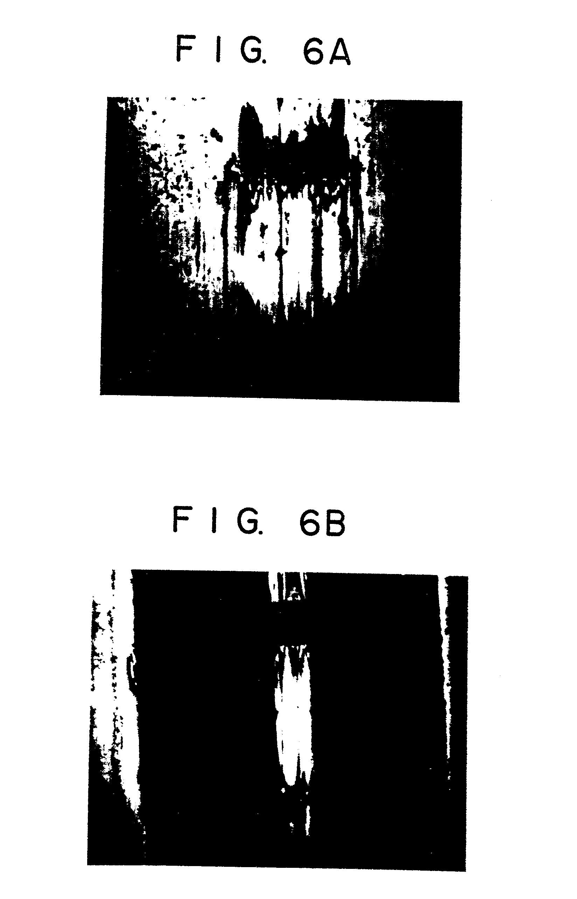

Figs. 6A and 6B are photographs showing the appearance of the surfaces of the magnetic heads shown in Figs. 1 and 4, respectively. In order to observe the appearance of the surfaces of the magnetic head the following experiment was conducted. Prepared were a conventional magnetic head as (shown in Fig. 1) and the magnetic head according to the present invention (shown in Fig. 4) where the width W of head chip 22 was 200 μm, radius of curvature R of the head surface was 40 mm and the width L of grooves 50 and 52 were both 600 μm. These magnetic heads were put into contact with a running flexible disk on which lubricating oil as substitute for dust or projection was formed.

As apparent from Fig. 6A, in the conventional magnetic head the lubricating oil was gathered on the head holders. However, as shown in Fig. 6B in the magnetic head according to the present invention, since the grooves are formed on the head holders at the sides of the head chip, the lubricating oil did not gather at the sides of the head chip. Therefore, the spacing between the head chip and the recording medium was not influenced by the lubricating oil serving as an intimate and stable contact between the head chip and the recording medium.

Further, the magnetic head shown in Figs. 4A, 4B and 4C does not have an adhesion layer adhering head chip 22 to head holders 24 and 26 on the surface of the magnetic head at its contact portion with the magnetic recording medium. Therefore, the magnetic recording medium is not damaged by the adhesion layer found in conventional magnetic heads. The conventional magnetic head shown in Fig. 1 often damages the magnetic recording medium because of a lack of uniformity of the adhesion layer. In order to form the adhesion layer uniformly, a glass adhesion method should be used. However, the magnetic head manufactured by such method is expensive. While, in the magentic head of the present invention since there is no adhesion layer at the portion where magnetic head 20 is in contact with the magnetic recording medium, the magnetic recording medium is not influenced by the adhesion layer. Therefore, in the magnetic head of the present invention an organic adhesion may be used to adhere head chip 22 to head holders 24 and 26.

Furthermore, the depth of the transducing gap of the magnetic head is an important factor in determining the efficiency and the lifetime of the magnetic head. In the conventional magnetic head shown in Fig. 1 it is impossible to observe the gap depth directly. Therefore, in the conventional magnetic head, the relationship of the gap depth and the impedance of the head is measured beforehand, then the gap depth is estimated from the measured impedance of the magnetic head based on the above-mentioned relationship. In the magnetic head of the present invention, the depth of groove may be optically measured directly. Accordingly, the gap depth of the magnetic head may be determined accurately and easily by the steps of measuring the relationship with the gap depth of the magnetic head before a lapping process is carried out on its surface and the depth of the groove 50 or 52, joining the head chip 22 to the head holders 24 and 26, and lapping the surface of the magnetic head while observing the depth of the groove 40 or 42.

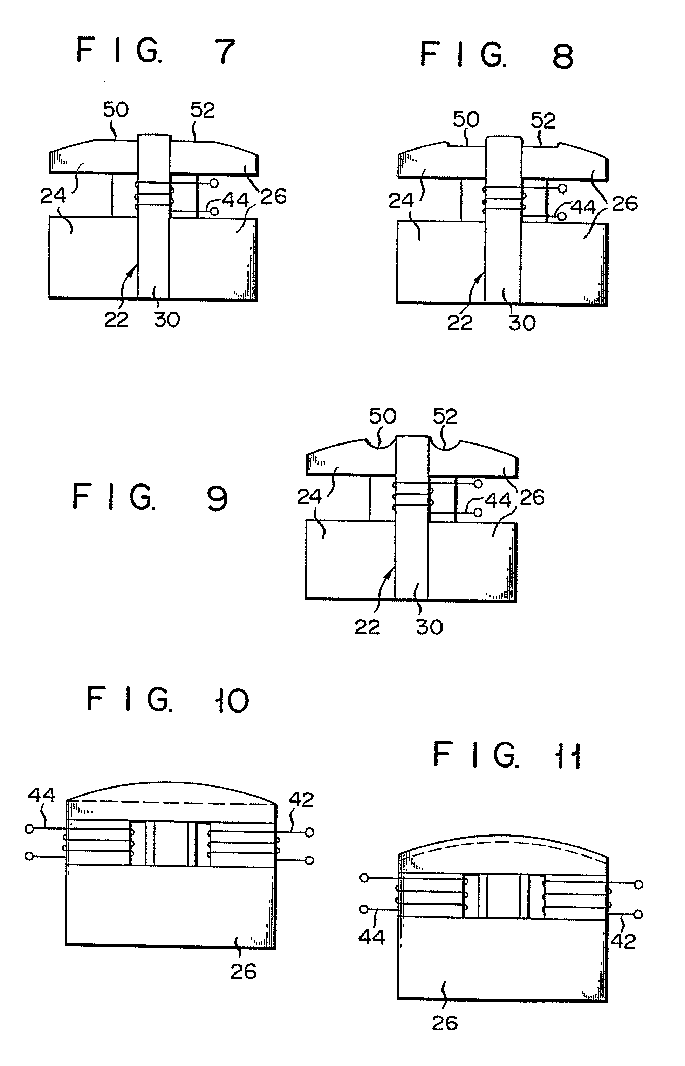

Figs. 7 to 11 show various modifications of the present invention, respectively. The magnetic head shown in Fig. 7 has grooves 50 and 52 with side width, the bottom portions of which continue to the surface of head holders 24 and 26, respectively.

In the magnetic head shown in Fig. 8, edges of head chip 22 and grooves 50 and 52 are softened (rounded) so as to minimize damage to the magnetic medium. The magnetic head shown in Fig. 9 has grooves 50 and 52, the section of which is semicircular.

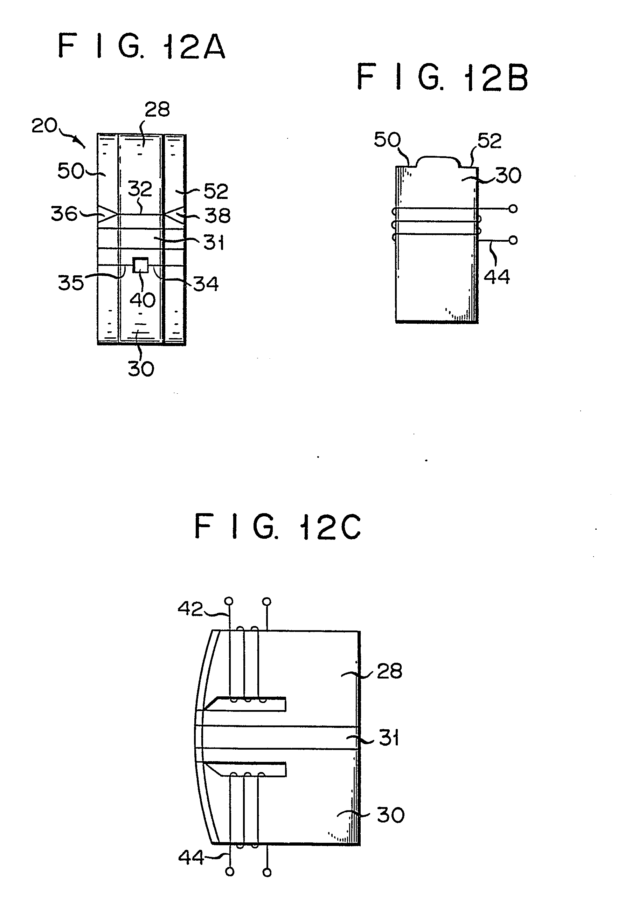

In the magnetic head shown in Fig. 10 grooves 50 and 52 are formed to extend over the total length of head holders 24 and 26 in the direction of the magnetic recording medium running. In Fig. 11, grooves 50 and 52 are formed with the constant depth from the surface of the magnetic head in the direction of the magnetic recording medium running.

Fig. 12 shows another embodiment of the magnetic head according to the present invention. This embodiment of the magnetic head includes a head chip of the wider width and is not provided with head holders. Grooves 50 and 52 are formed on the head chip.

In the embodiments the depth, width, length, shape and so on of the groove are decided properly in accordance with flexibility of the recording medium, radius of curvature of the head surface, the ease of the manufacture and so on.

In the embodiments described above the grooves are formed on the head holders at both sides of the head chip. However, the groove may be formed at one side of the head chip.

Further, in the magnetic head embodiment wherein there are grooves at both sides of the head chip, the shape of the grooves may be different from each other.

While the present invention has been described in connection with what is presently considered to be the most practical and preferred embodiments, it is to be understood that the present invention is not to be limited to the disclosed embodiments but on the contrary, is intended to cover various modifications and equivalent arrangements included within the spirit and scope of the appended claims which scope is to be accorded the broadest interpretation so as to encompass all such modifications and equivalent structures.

Claims:

1. A magnetic head for recording a signal on a magnetic recording medium in contact with the surface thereof and/or for reproducing a signal therefrom comprising:

a head chip (22) including at least one head core (28, 30) of magnetically permeable material which is closed except for a transducing gap (32, 34, 35) provided in the core on an active surface of said magnetic head;

a coil wound (42, 44) on said head core; and

a head hold member (24, 26) of non-magnetic material for holding said head chip (22), said head hold member having a guide surface which is brought into slidable contact with said magnetic recording medium, and at least one groove (50, 52) being formed on said guide surface substantially adjacent to said head chip and along the direction of said magnetic recording medium movement.

2. A magnetic head according to claim 1, characterized in that said head chip (22) includes read/write and erase head cores (28, 30) adhered together with a spacer (31) of a non-magnetic material interposed therebetween, said cores having read/write gap (32) and erase gap (34, 35), respectively.

3. A magnetic head according to claim 1, characterized in that said head hold member comprises a pair of head holders (24, 26) holding said head chip (22) therebetween.

4. A magnetic head according to claim 1, characterized in said groove (50, 52) is formed at each side of said head chip (22) on said guide surface.

5. A magnetic head according to claim 1, characterized in that an edge of said groove (50, 52) comes into contact with an edge of said head chip (22).

6. A magnetic head for recording a signal on magnetic recording medium in contact with the surface thereof and/or reproducing the signal therefrom comprising:

a head core (28, 30) of magnetically permeable material which is closed except for a transducing gap (32, 34, 35) provided in the core on an active surface of said magnetic head, said head core being formed with grooves (50, 52) along the direction of the magnetic recording medium movement at both sides of said transducing gap on the surface of said head core; and

a coil (42, 44) wound on said head core (28, 30).

FIG. 1A

FIG. 1C

FIG. 1B

FIG. 2

F I G. 3A

F I G. 3B

F I G. 3C

F I G. 4A

F I G. 4B

F I G. 4C

# F I G.  5A

1V ——

0V ——

1V —— · — · —— 20K BPI

1 PERIOD

# F I G.  5B

1V ——

0V —— · — · —— 20K BPI

1V ——

1 PERIOD

# F I G. 6A

# F I G. 6B

FIG. 7

FIG. 8

FIG. 9

FIG. 10

FIG. 11

# F I G. 12A

# F I G. 12B

# F I G. 12C